# EUROPEAN PATENT SPECIFICATION

(11) **EP 3 026 658 B1**
(45) Date of publication and mention of the grant of the patent: **15.06.2022**
(21) Application number: 15824821.1
(22) Date of filing: 06.07.2015
(51) Int. Cl.: G09F 19/22

(54) **FLAT ADVERTISING DEVICE AND USE THEREOF IN A SPORTS AREA**
FLACHE WERBUNGSVORRICHTUNG UND VERWENDUNG DAVON IN EINER SPORTUMGEBUNG
DISPOSITIF PUBLICITAIRE PLAT ET SON UTILISATION DANS UN TERRAIN DE SPORT

(30) Priority: 22.07.2014 ES 201431100
(43) Date of publication of application: 01.06.2016
(73) Proprietor: Livead Space Mark Up, S.L., 08195 Sant Cugat Del Valles (Barcelona) (ES)
(72) Inventor: IRIARTE SANLLEHI, Ignacio, E-08198 Sant Cugat Del Valles (Barcelona) (ES)
(74) Representative: Durán-Corretjer, S.L.P.
(86) International application number: PCT/ES2015/070525
(87) International publication number: WO 2016/012643

(56) References cited:
- EP-A2- 2 698 781
- WO-A1-93/04559
- WO-A1-98/43231
- WO-A1-2014/068474
- WO-A1-2014/068474
- WO-A2-2004/042683
- US-A1- 2006 109 511

## Description

The present invention relates to a flat advertising device according to the features of claim 1 and its corresponding use in a sports arena according to the features of claim 10.

The flat advertising device of the present invention is of particular application to large sports arenas and more particularly to football fields, although the invention is not necessarily limited to this application.

Due to the large size of sports arenas and in particular of football fields, spectators perceive the pictorial and alphanumeric elements of the advertising devices in a deformed manner. This effect is even more pronounced in the case of flat advertising devices arranged on the ground, where the deformation is such that the graphic and/or pictorial elements are deprived of any import. Different methods are known in the state of the art that provide a solution to the problem mentioned above.

Thus, the document WO9304559 discloses a method that uses an anamorphic technique whereby the graphic elements of an advertising device situated on the ground are deformed along two perpendicular axes so that they appear to be situated perpendicular to the line of sight from a given point of observation. The point of observation may, for example, be that of a camera.

On the other hand, the document WO9843231 discloses a different anamorphic technique whereby the graphic element of the flat advertising device situated on the ground is deformed in all directions in such a way that, from a selected point of observation, it appears to be situated perpendicular to the ground.

These techniques are not without disadvantages. A first disadvantage is that they solve the problem of apparent deformation only for the observer situated at a particular point. For other observers, the graphic motif is even more deformed, and this affects the image of the advertised brand. A second disadvantage is that creating an advertising device according to the prior art requires the measurements of the sports ground to be taken. A third disadvantage is that it is sometimes necessary to deform the graphic motif so much that it does not fit in the available space. This often happens on the edges of football fields.

The document US 2006/109511 A1 discloses a flat advertising device for placement on the ground, of the type that has a graphic element.

It is an aim of the present invention to disclose an advertising device that does not appear excessively distorted for the spectators and/or the cameras and is perceived as being situated on the ground of the field.

In particular, the present invention comprises a flat advertising device for placement on the ground, of the type that has a graphic element deformed for better viewing by the observers, the flat advertising device defining two main axes perpendicular to each other and characterised in that the graphic element is deformed only along one axis, said axis being one of said two main axes perpendicular to each other and in that said deformation consists of an elongation of less than 100% of the length of the undeformed graphic element. Preferably, the deformation is equal to or greater than 20% and equal to or less than 50%. More preferably, the deformation is equal to or greater than 40%.

The present invention proposes abandoning the known method of calculating a specific deformation that is applied in all directions and calculated to give the impression of an absence of deformation at a particular point, and proposes the inclusion of a small (relative to the state of the art) and limited deformation which means that multiple observers perceive the graphic motif as with a deformation such that it deprives the graphic motif of any import. Another effect of the limited deformation proposed by the present invention is that the deformed motif succeeds in appearing to be situated on the ground, and not partially raised or even totally vertical, as happens in the known state of the art. The present invention facilitates the production of television broadcasts, since the producer does not need to take care to shoot the advertising device from a point of view other than the one intended, since from any location the spectator does not perceive any significant deformation in the graphic motif.

In order to increase the contrast between the ground - for example, the turf - and the advertising device, and to avoid any effect of apparent inclination of the device with respect to the ground, the visible silhouette of the graphic motif may coincide with the silhouette of the device. This may be achieved, for example, by cutting out. Preferably, the graphic motif comprises various independent graphic sub-motifs, the said independent graphic sub-motifs being joined together by means of bridging elements that are camouflaged with the ground.

More preferably, the camouflage is a camouflage that mimics turf.

In a particularly preferred embodiment, the device is made of EVA (ethyl vinyl acetate) with a bottom ballast layer made of a more dense material.

More preferably, the ballast layer is made of rubber.

The present invention also relates to the use in a sports arena, preferably a football field, of the advertising device forming the subject of the present invention, characterized in that the axis of deformation of the graphic element is placed perpendicular to a lateral boundary line that defines a playing area.

To allow a clearer understanding, by way of explanatory and non-limitative example, some drawings are attached of an embodiment of the advertising device that forms the subject of the present invention.
Figure 1 shows a perspective view of an application of a device according to the present invention.
Figure 2 shows the application of Figure 1, from a different point of view.
Figure 3 shows a perspective view of an embodiment of a flat advertising device according to the present invention.
Figure 4 shows schematically a method of deformation according to the present invention.

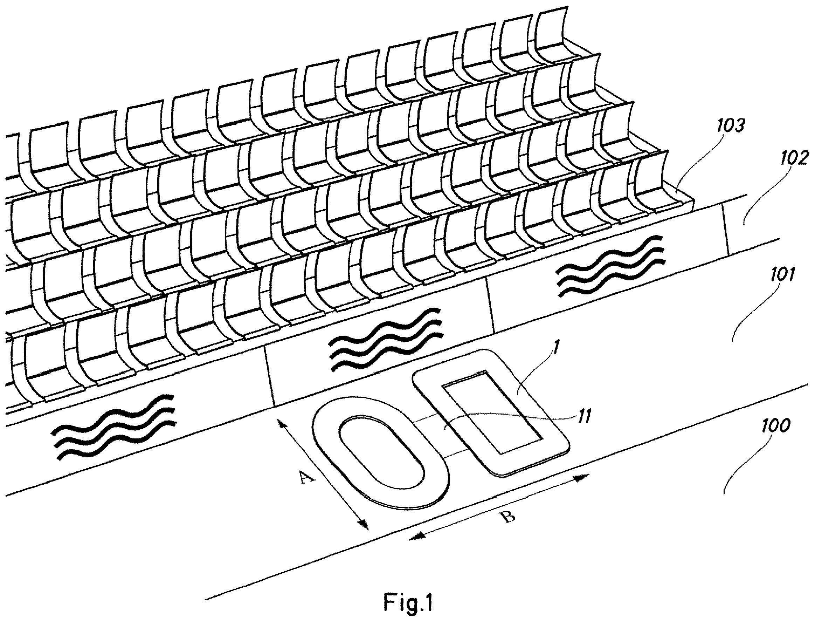

Figure 1 shows an advertising device -1- according to the present invention, applied to a sports ground, more specifically a football field.

The advertising device -1- is placed at the side of the field, i.e. in the free space between the boundary of the playing area -100- and the barriers -102- that separate the field from the tiered seats -103-. As can be seen, the advertising device consists of a cut-out graphic motif with two sub-motifs joined together by a bridging element -11-. The advertising device -1- defines two main axes -A- and -B- perpendicular to each other. The axis -B- is parallel to the lateral boundary line that defines the playing area -100-, and the advertising motif displayed by the device -1- is deformed in the direction of the axis -A- perpendicular to the said axis -B-.

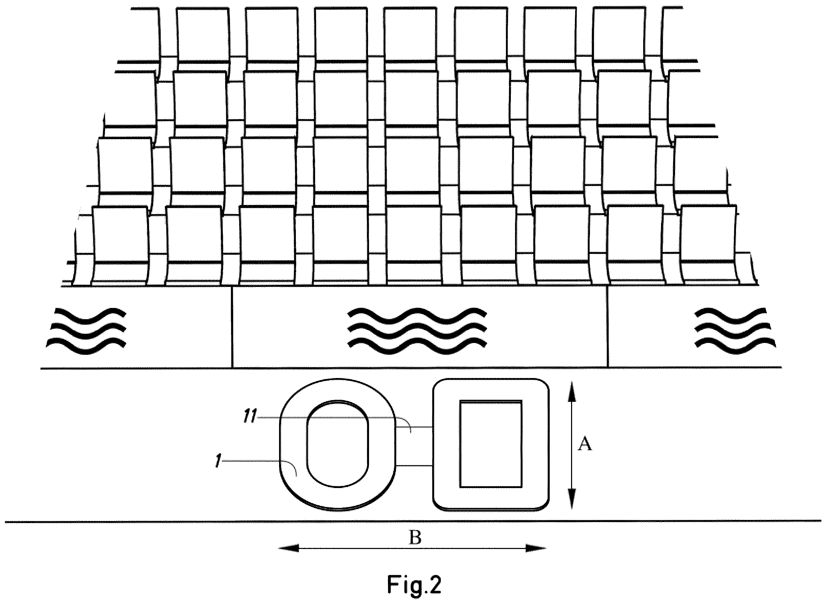

Figure 2 shows a view of the device of Figure 1 from a high point of the opposite seating tier. It can be seen that the motif of the advertising device -1- does not appear to be excessively deformed, but nor does it appear to be raised or inclined with respect to the ground. This impression is helped by the fact that the advertising motif is cut out. In this case, the silhouette of the advertising motif and that of the advertising device coincide with each other. In other words, the advertising device has no background. This produces a chromatic contrast between the displayed graphic motif and the ground (turf), making it difficult to discern whether the device is situated on the ground or inclined with respect to the ground. This, in turn, mitigates any impression of inclination with respect to the ground that might be caused by the deformation along the axis -A-. Another contributing factor is the fact that there is no corresponding deformation along the axis -B- parallel to the playing area 100. A deformation of the graphic motif by 50% along the axis A of deformation, if it were accompanied by the corresponding deformation along the perpendicular axis -B-, could give the impression that the advertising device is inclined at an angle of 48°. In the case of the invention, the absence of any deformation in one of the axes and the cutting-out of the graphic motif disguise this effect. Nevertheless, it is recommended for this reason to limit the amount of deformation applied.

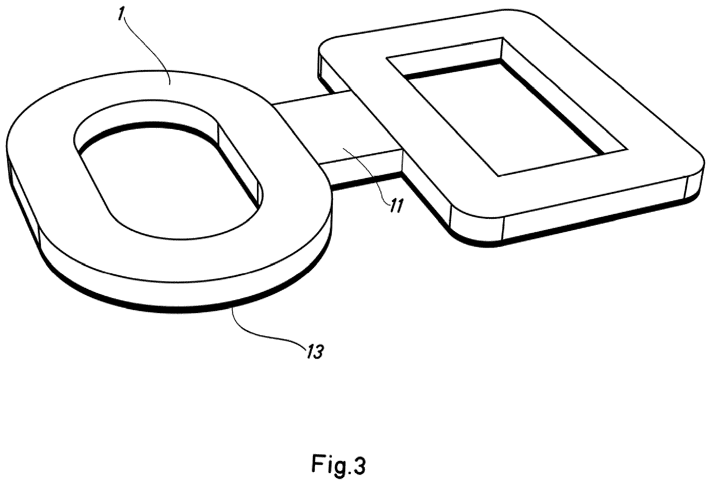

Figure 3 shows a perspective view of a possible embodiment of the device according to the present invention. The device of the example consists of two layers: a 1.5 cm layer -12- made of EVA in the upper portion, and a 1 cm layer -13- made of rubber or elastomer material in the lower portion. The upper layer -12- provides protection for the players, while the lower layer -13- acts as ballast. Both layers may be laser-cut separately and glued together subsequently. Thus, the two-layer assembly of the example has a thickness of less than 2.5 cm so as not to stand out excessively from the turf. The two sub-motifs that make up the graphic motif shown are joined together by a bridging element that is covered with digital camouflage printing (photo of turf, or of a colour similar to that of turf), the edges being painted in a green colour similar in shade to that of the turf. The device may consist of a single element or may be formed of different elements joined together. In the latter case, the joint between elements may be made at the bridging points between sub-motifs, using interlocking joints similar to those between the pieces of a jigsaw puzzle.

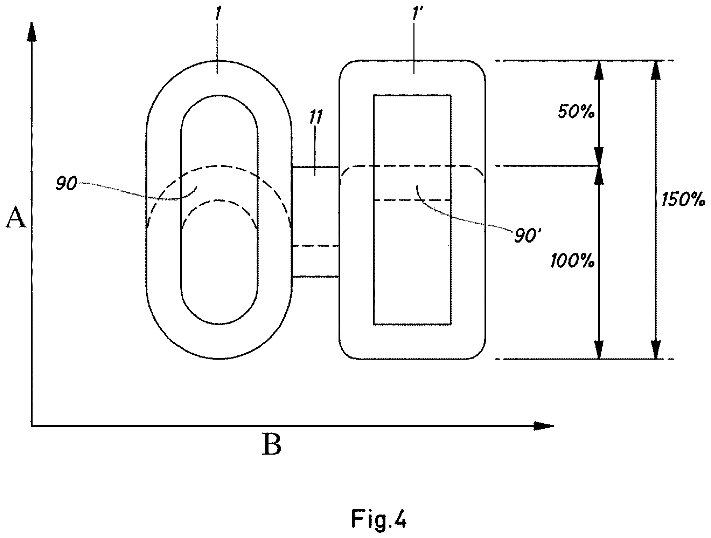

Figure 4 shows in schematic form the process of deforming the graphic motif of an advertising device according to the invention. The graphic motif of Figure 4 consists of two independent graphic motifs -1-, -1'- joined together by a bridging element -11-. As shown in the drawing, the graphic sub-motifs in the undeformed state -90-, -90'- are an "o" and a square, respectively. The undeformed graphic sub-motifs -90-, -90'- are deformed only in the direction of the axis -A-, being undeformed in the direction of the axis -B- perpendicular to it, i.e. the "horizontal" axis.

The deformation consists of stretching by 50% the length of the undeformed graphic sub-motifs -90-, -90'- in such a way that the deformed graphic sub-motifs -1-, -1'- have a length of 150% with reference to the 100% of the length of the axis A of the undeformed graphic sub-motifs.

## Claims

1. Flat advertising device for placement on the ground, of the type that has a graphic element deformed for better viewing by observers, the flat advertising device defining two main axes perpendicular to each other and **characterised in that** the graphic element is deformed only along one axis, said axis being one of said two main axes perpendicular to each other and **in that** said deformation consists of an elongation of less than 100% of the length of the undeformed graphic element.

2. Device according to claim 1, **characterised in that** the deformation is equal to or less than 50% of the length of the undeformed graphic element.

3. Device according to claim 1 or 2, **characterised in that** the deformation is equal to or greater than 20% of the length of the undeformed graphic element.

4. Device according to claim 3, **characterised in that** the deformation is equal to or greater than 40% of the length of the undeformed graphic element.

5. Device according to any one of the preceding claims, **characterised in that** the graphic element is cut out, the visible silhouette of the device coinciding with the silhouette of the graphic element.

6. Device according to claim 5, **characterised in that** the graphic element comprises various independent graphic sub-elements, the said independent graphic sub-elements being joined together by means of bridging elements that are camouflaged with the ground.

7. Device according to claim 6, **characterised in that** the camouflage is a camouflage that mimics turf.

8. Device according to any one of claims 1 to 7, **characterised in that** the device is made of EVA (ethyl vinyl acetate) with a bottom ballast layer made of a more dense material.

9. Device according to claim 8, **characterised in that** the ballast layer is made of rubber.

10. Use in a sports arena of an advertising device according to any one of claims 1 to 9, **characterized in that** the axis of deformation of the graphic element is placed perpendicular to a lateral boundary line that defines a playing area.

11. Use, according to claim 10, **characterised in that** the sports arena is a football field.

## Patentansprüche

1. Flache Werbevorrichtung zum Anordnen auf dem Boden, von der Art, die ein grafisches Element aufweist, das verformt ist, um von Beobachtern besser gesehen zu werden, wobei die flache Werbevorrichtung zwei zueinander senkrechte Hauptachsen definiert und **dadurch gekennzeichnet ist, dass** das grafische Element nur entlang einer Achse verformt ist, wobei diese Achse eine der beiden zueinander senkrechten Hauptachsen ist, und dass die Verformung aus einer Verlängerung von weniger als 100% der Länge des unverformten grafischen Elements besteht.

2. Vorrichtung nach Anspruch 1, **dadurch gekennzeichnet, dass** die Verformung gleich oder weniger als 50% der Länge des unverformten grafischen Elements beträgt.

3. Vorrichtung nach Anspruch 1 oder 2, **dadurch gekennzeichnet, dass** die Verformung gleich oder größer als 20% der Länge des unverformten grafischen Elements ist.

4. Vorrichtung nach Anspruch 3, **dadurch gekennzeichnet, dass** die Verformung gleich oder größer als 40% der Länge des unverformten grafischen Elements ist.

5. Vorrichtung nach einem der vorangegangenen Ansprüche, **dadurch gekennzeichnet, dass** das grafische Element ausgeschnitten ist, wobei der sichtbare Umriss der Vorrichtung mit dem Umriss des grafischen Elements übereinstimmt.

6. Vorrichtung nach Anspruch 5, **dadurch gekennzeichnet, dass** das grafische Element verschiedene voneinander unabhängige grafische Unterelemente umfasst, wobei die unabhängigen grafischen Unterelemente durch Brückenelemente miteinander verbunden sind, die mit dem Boden getarnt sind.

7. Vorrichtung nach Anspruch 6, **dadurch gekennzeichnet, dass** die Tarnung eine Tarnung ist, die Rasen nachahmt.

8. Vorrichtung nach einem der Ansprüche 1 bis 7, **dadurch gekennzeichnet, dass** die Vorrichtung aus EVA (Ethylvinylacetat) mit einer unteren Ballastschicht aus einem dichteren Material hergestellt ist.

9. Vorrichtung nach Anspruch 8, **dadurch gekennzeichnet, dass** die Ballastschicht aus Gummi hergestellt ist.

10. Verwendung einer Werbevorrichtung nach einem der Ansprüche 1 bis 9 in einer Sportarena, **dadurch gekennzeichnet, dass** die Verformungsachse des grafischen Elements senkrecht zu einer seitlichen Begrenzungslinie angeordnet ist, die eine Spielfläche definiert.

11. Verwendung nach Anspruch 10, **dadurch gekennzeichnet, dass** die Sportarena ein Fußballfeld ist.

## Revendications

1. Dispositif publicitaire plat destiné à être placé sur le sol, du type comportant un élément graphique déformé pour une meilleure visualisation par les observateurs, le dispositif publicitaire plat définissant deux axes principaux perpendiculaires l'un à l'autre et **caractérisé en ce que** l'élément graphique est déformé uniquement selon un axe, ledit axe étant l'un desdits deux axes principaux perpendiculaires l'un à l'autre et **en ce que** ladite déformation consiste en un allongement inférieur à 100% de la longueur de l'élément graphique non déformé.

2. Dispositif selon la revendication 1, **caractérisé en ce que** la déformation est égale ou inférieure à 50% de la longueur de l'élément graphique non déformé.

3. Dispositif selon la revendication 1 ou 2, **caractérisé en ce que** la déformation est égale ou supérieure à 20% de la longueur de l'élément graphique non déformé.

4. Dispositif selon la revendication 3, **caractérisé en ce que** la déformation est égale ou supérieure à 40% de la longueur de l'élément graphique non déformé.

5. Dispositif selon l'une quelconque des revendications précédentes, **caractérisé en ce que** l'élément graphique est découpé, la silhouette visible du dispositif coïncidant avec la silhouette de l'élément graphique.

6. Dispositif selon la revendication 5, **caractérisé en ce que** l'élément graphique comprend différents sous-éléments graphiques indépendants qui sont reliés entre eux au moyen d'éléments de pontage camouflés avec le sol.

7. Dispositif selon la revendication 6, **caractérisé en ce que** le camouflage est un camouflage qui imite le gazon.

8. Dispositif selon l'une quelconque des revendications 1 à 7, **caractérisé en ce que** le dispositif est réalisé en EVA (éthyle vinyle acétate) avec une couche inférieure de lestage réalisée dans un matériau plus dense.

9. Dispositif selon la revendication 8, **caractérisé en ce que** la couche de lestage est réalisée en caoutchouc.

10. Utilisation dans une enceinte sportive d'un dispositif publicitaire selon l'une quelconque des revendications 1 à 9, **caractérisée en ce que** l'axe de déformation de l'élément graphique est placé perpendiculaire à la ligne frontière latérale qui définit une zone de jeu.

11. Utilisation, selon la revendication 10, **caractérisée en ce que** l'enceinte sportive est un terrain de football.
